# EUROPEAN PATENT APPLICATION

(11) **EP 4 112 675 A1**
(43) Date of publication of application: **04.01.2023**
(21) Application number: 22460026.2
(22) Date of filing: 10.06.2022
(51) Int. Cl.: C08J 3/12, C08J 3/205, C08J 3/22, C08L 67/00, C08L 77/00

(54) **THE METHOD OF OBTAINING AN ANTIMICROBIAL COMPOSITE CONTAINING ZINC COMPOUNDS AND AN ANTIMICROBIAL COMPOSITE CONTAINING ZINC COMPOUNDS**

(30) Priority: 29.06.2021 PL 43830221
(71) Applicant: Panamedica Maciej Michalik, 15-025 Bialystok (PL)
(72) Inventor: Michalik, Maciej, 15-025 Bialystok (PL); Kupinska, Katarzyna, 19-300 Elk (PL); Wilczewska, Agnieszka Zofia, 15-078 Bialystok (PL); Kalska-Szostko, Beata, 15-756 Bialystok (PL); Krajenta, Justyna, 91-849 Lódz (PL)

(57) **Abstract**

The subject of the invention is a method for preparing an antimicrobial composite containing zinc compounds and an antimicrobial composite containing zinc compounds.

The method of obtaining an antimicrobial composite used as an additive to plastics containing polyolefins, polyesters or polyamides and zinc oxide, which are incorporated into polymers during extrusion, wherein that to zinc salts, preferably zinc acetate or zinc sulphate or zinc nitrate or zinc chloride in an amount of 27% to 42% by weight, deionized water is added in an amount from 35.4% to 71.3% by weight and stirred with a mechanical stirrer for 1 hour at 25 °C to 90 °C. Then 1.7% to 20% by weight of stabilizing polymer selected from the group of polyvinylpyrrolidone, polyimine, polyethylene glycol, polyacrylate, polyvinyl alcohol or polysulfone is added, with continued stirring for another 2 hours, then the mixture is filtered through a 500 µm filter and conditioned at room temperature or higher up to 90 °C until it is loaded into the extruder feeder. The obtained solution of zinc salt and stabilizing polymer are dosed into the cylinder extruder with polyolefins during the extrusion process with a pump at a speed of 11.5 rpm, is mixed and heated to the softening point of the polymer and pressed through nozzles, then cooled on a cooling belt or in a cooling bath and ground with a granulator and dried in a dryer at 80 °C for 1 hour. A composite based on polyolefins or polyesters or polyamides with antimicrobial properties is characterized by the fact that it contains polymer from 89-99.65% (w / w), zinc 0.25-10% (w / w) and 0.1-1% (w / w) stabilizer a sorbitan monopalmitate or stearyl alcohol.)

## Description

The subject of the invention is a method of obtaining of an antimicrobial composite containing zinc compounds and an antimicrobial composite containing zinc compounds used in the packaging, pharmaceutical and medical industries.

In recent years, there has been a lot of interest in the use of polymers for fabrication of materials that exhibit antibacterial or antifungal properties. These materials can be used in places where hygiene and sterile conditions are particularly required such as: hospitals or health care facilities, and thus they can become an alternative to commonly used disinfectants, most of which are highly toxic to the environment and the human body.

In the literature, there are known methods of obtaining composites containing zinc oxide, consisting in introduction of ZnO in a powder form during melt mixing process. [ Saisy K. Esthappan, Ajalesh B. Nair, Rani Joseph, Effect of crystallite size of zinc oxide on the mechanical, thermal and flow properties of polypropylene/zinc oxide nanocomposites, Composites Part B: Engineering 2015, 145-153 and Saisy K. Esthappan, Rani Joseph, Resistance to Thermal Degradation of Polypropylene in Presence of Nano Zinc Oxide, Progress in Rubber Plastics Recycling Technology, 2014, 30(4):211-220 and A. Marra, G. Rollo, S. Cimmino, C. Silvestre, Assessment on the Effects of ZnO and Coated ZnO Particles on iPP and PLA Properties for Application in Food Packaging, Coatings 2017, 7, 29]. The disadvantage of these methods is the difficulty in obtaining an even dispersion of the powder in the polymer matrix while maintaining the form and the nanometric scale of particles. This results in formation of agglomerates, the presence of which reduces the active surface of the additive and, consequently, reduces their activity at the assumed concentration.

Another method of producing products showing bacteriostatic and biocidal activity are methods consisting in attaching silver and / or zinc oxide to the fiber surface during spinning treatment e.g., an immersion in a zinc acetate solution. After the bath, the cotton material is heat treated at 150 °C, which results with ZnO nanowires formation on the surface of the fibers [Wang R., Xin J.H., Tao X.M., Daoud W.A., ZnO Nanorods grown on cotton fabrics at low temperature, Chemical Physics Letters, 2004, 398, 250].

The CBD method (chemical bath deposition) allows deposit on natural as well as on synthetic fibers. In this method, the growth of zinc structures occurs in the zinc ion precursor solution, at higher temperature, usually in range of 60-95 °C [Fiedot M., Karbownik I., Maliszewska I., Rac O. Suchorska-Wozniak P. Teterycz H., Deposition of one-dimensional zinc oxide structures on polypropylene fabrics and their antibacterial properties, Textile Research Journal, 2015, 85, 1340].

The European patent application EP3015422 discloses an additive used in the plastics industry in the form of a bacteriostatic masterbatch produced by mixing a zinc oxide nanoparticle concentrate and a metallic silver nanoparticle concentrate. The bactericidal additive for use in the manufacture of plastic products using the biological, physical, and chemical properties of metallic silver and zinc oxide, is effective when used in a proportion between 0.01% and 0.5% based on the total weight of the composition depending on the type of polymer and its end use. It is used especially for items that have direct contact with food or skin.

The aim of the invention is to produce a composite with antimicrobial properties for the production of nonwoven fabrics used, in particular, for the fabrication of disposable medical devices, in the food or pharmaceutical industry.

The essence of the invention is a method of obtaining an antimicrobial composite used as an additive to plastics, containing polyolefins or polyesters or polyamides and zinc oxide, which are incorporated into polymers or their mixtures during extrusion, characteristic in this that zinc salts, preferably zinc acetate or zinc sulphate or zinc nitrate or zinc chloride in an amount of 27-42% (w / w), deionized water in an amount of 35.4-71.3% (w / w) is added and stirred until a homogeneous mixture is obtained. Next, a polymeric stabilizer e.g., polyvinylpyrrolidone or polyacrylates or polyimine or polysulfone or poly (ethylene glycol) or poly (vinyl alcohol) or its mixture in amount of 2,7-20% (w / w) is added to the solution with constant stirring for another 2h up to obtain a homogeneous system. As prepared solution of zinc salt and stabilizing polymer is dosed to the feed zone of the extruder cylinder with simultaneous dosing of the selected polyolefin or polyester or polyamide or their mixtures. The solution is dosed by a peristaltic pump. The zinc salt solution is blended with polyolefin in extruder at higher temperature. After heating to the softening point of the polymer, it is forced through nozzles. Next, it is chilled on a cooling belt or in a cooling bath and ground using a granulator. Before the extrusion process, the polyolefins are initially dried in a dryer at 25-80 °C for 1h.

It is preferred that 98-99.9% polyolefin or polyester or polyamide is mixed with 0.1% -2% stabilizer and heated at 80-120 °C for 1 hour prior to loading into the extruder.

According to a preferred procedure, sorbitan monopalmitate or stearyl alcohol is added as a stabilizer.

The composite based on polyolefins, polyesters, or polyamides with an additive of antimicrobial properties, wherein it contains a polymer from 88% -99.65% (w / w), zinc 0.25-10% (w / w) and 0.1-2% (w / w) of low molecular weight stabilizer.

The composite as a low molecular weight stabilizer includes a sorbitan monopalmitate and as a low molecular weight stabilizer includes a stearyl alcohol.

The zinc compound containing antimicrobial composite obtained by the process of the invention may find application in the production of dressings, medical garments, and other medical materials, reducing the risk of bacterial infection. It can also be used in packaging, including for food, in air-conditioning ducts, and where a typical and undesirable phenomenon is a strong multiplication of microorganisms at an elevated temperature.

The solution of zinc compounds stabilized with a stabilizing polymer used in the preparation of the antimicrobial composite was obtained by:
- dissolving at least one zinc salt in water: acetate or chloride or nitrate or sulphate by intensive stirring with a magnetic stirrer or a mechanical stirrer or a homogenizer at 25-90 °C until a clear solution is obtained,
- addition of a polymeric particle stabilizer such as: polyvinylpyrrolidone or polyimine or polyacrylate or polysulfone or polyvinyl alcohol or polyethylene glycol to the zinc solution and further mixing by means of a magnetic stirrer or mechanical stirrer or homogenizer at room temperature or higher (up to 90 °C) to obtain a homogeneous mixture of all ingredients,
- filtration of the solution through a filter with pores of approx. 500 µm,
   and / or
- addition of a base, e.g., NaOH, KOH, NH3 to pH = 11,
   and / or
- heating the solution for 4 hours at 80 ° C.

Before starting the extrusion, the activities necessary to synchronize the dosing of the polymer and the solution were carried out.

The solution was introduced directly into the extruder having 12 heating sections during the extrusion process, which consists of the following steps:
- setting the temperature in individual heating zones of the extruder in the range of 165-250 °C.
- mixing the polymer with 0.1-2% (w / w) stabilizer (stearyl alcohol or sorbitan monopalmitate) with an industrial mixer at 90 °C.
- conditioning of the mixture of polyolefins or polyesters or polyamides and the stabilizer at a temperature of 25-90 °C until loading into the feeder.
- feeding the polymer into the extruder cylinder.
- simultaneous dosing of the solution to the extruder in the extrusion process to individual heating zones with an appropriate flow rate. During the extrusion process, zinc compounds (in solution) fed by the pump are transformed into zinc oxide or its intermediate forms as a result of high temperature, increased pressure, friction, and shear forces. The presence of the stabilizing polymer during the evaporation of the solvent (water) causes the resulting particles to be surrounded with stabilizer chains, which ensures that the size is kept small, and the particles are well dispersed in the polymer matrix.
- cooling - performed on a cooling belt or in a cooling bath.
- grinding - performed with a granulator.
- drying - the composite was transferred to a dryer and dried at 25-90 °C for 1 hour.

As a result of dosing solutions of zinc compounds (stabilized with a suitable polymer with or without alkali, with preheating or mixed at room temperature), a polyolefin granulate was obtained with the assumed concentration of zinc compounds with submicron sizes of inorganic inclusions.

The obtained composite was subjected to a physicochemical analysis. The particles were characterized by microscopic techniques (optical microscopy, scanning electron microscopy (SEM) and transmission electron microscopy (TEM) and X-ray diffraction (XRD)). The FAAS flame atomic absorption spectroscopy method was used to test the Zn content in the product. The melt mass-flow index was determined, and the thermal properties of the products were examined by the methods of thermogravimetry (TGA) and differential scanning calorimetry (DSC).

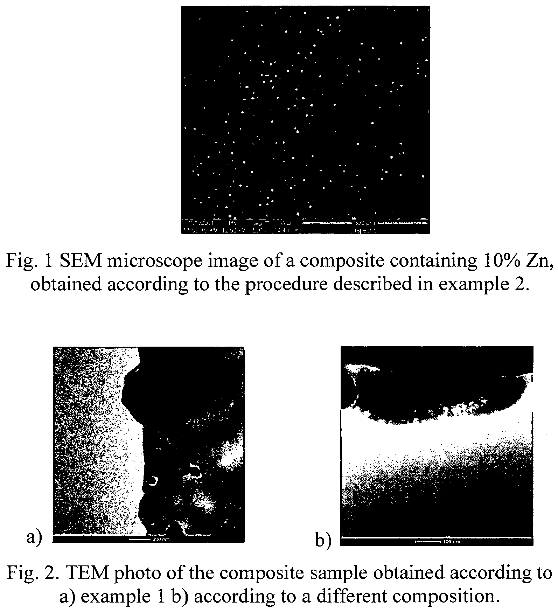

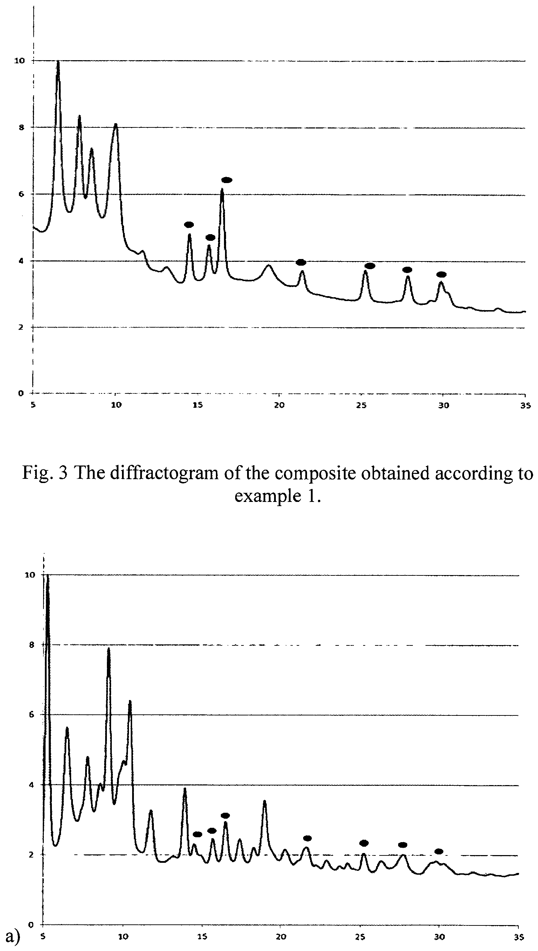

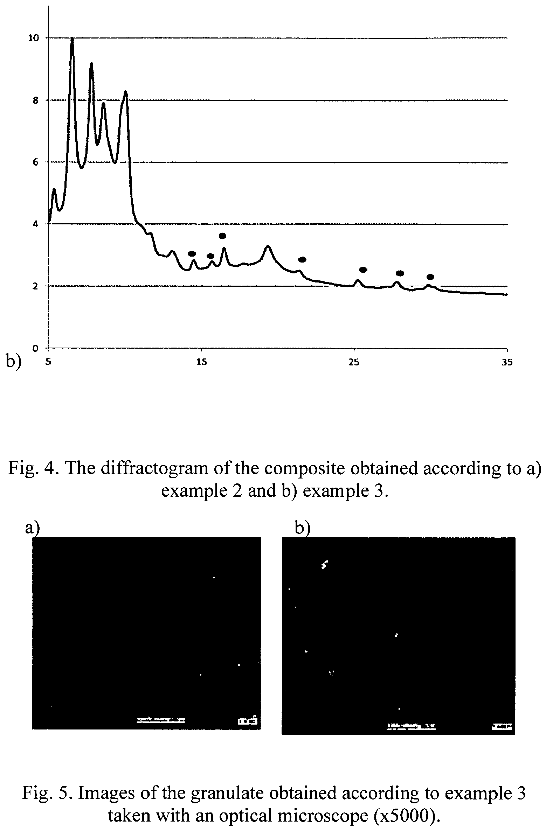

The study of the antimicrobial activity of composite samples according to ISO 20743: 2019-10 was carried out on the strains of *Staphylococcus aureus* and *Klebsiella pneumoniae* bacteria. In order to confirm the assumptions of the technological process and antimicrobial activity, a series of physicochemical analyzes and biological tests were performed.
1. The concentration of zinc in the composite was determined by flame atomic absorption spectroscopy (FAAS). The obtained results are very close to the nominal zinc content in the tested samples, which proves good control over the process. Example of FAAS analyzes are presented below (Table 4).
2. The morphology of the obtained polymer composite with different concentrations was checked using microscopic methods (optical microscope, SEM and TEM). It was found that as a result of the extrusion process, evenly dispersed throughout the volume of the material ZnO particles or its intermediate forms, are synthesized. Example of the photos of the formed particles with a wide range of sizes (depending on the amount of the introduced precursor - zinc compound) are shown in Fig. 1, 2).
3. The crystal structure was confirmed by X-ray diffraction. Peaks indicating the presence of crystalline forms of ZnO were observed in the diffraction patterns. Example of the XRD analyzes are shown in Figure 3. The crystallinity of polypropylene was tested by Differential Scanning Calorimetry (DSC).
4. The melt mass-flow index was determined with a plastometer according to the ISO 1133-1 standard. It was found that the values of the melt flow indiex increase with increasing content of zinc compounds in the polymer, from 37.43 to 99.49 g / 10min.
5. The study of antibacterial activity according to ISO 20743: 2019-10 was carried out on the bacterial strains *Staphylococcus aureus* and *Klebsiella pneumoniae* (Table 5). Composites with a content of 0.4% Zn already showed antimicrobial activity against both strains, and those with a concentration of 0.25% still showed strong antibacterial activity against *Klebsiella pneumoniae,* but no such activity against *Staphylococcus aureus* was observed.

### Example 1

270 g (27%, w / w) of zinc acetate and 713 g (71.3%, w / w) of deionized water were weighed into a conical flask. Dissolution of the zinc salt was carried out using a magnetic stirrer for 1h at room temperature and rotation speed of 500 rpm. Then 17 g (1.7%, w / w) of polyethyleneimine (PEI) was added. Stirring was continued under the same conditions for another 2h. The mixture was filtered through a 500 µm filter.

Polypropylene was mixed with 0.1% stearyl alcohol and conditioned at 80 °C for 1h before loading into the extruder hopper. The feeder speed was set to 10 rpm. The zinc acetate and polyethyleneimine solution was dosed into the fifth heating zone of the extruder using a peristaltic pump at 8.1 rpm. The extrusion conditions are summarized in Table 1.

**Table 1.**

| **Temperatures [°C]** | **Feeder speed [rpm]** | **Dosing pump speed [rpm]** |
|---|---|---|
| 150/160/170/180/185/185/185/180/175/175/170/170 | 10 | 8.1 |

The masterbatch was cooled in a cooling bath and then ground with a granulator. As a result of the extrusion, it was assumed to obtain a composite containing 2% ZnO.

### Example 2

270 g (27%, w / w) of zinc acetate and 713 g (71.3%, w / w) of deionized water were weighed into a conical flask. Dissolution of the zinc salt was carried out with a stirrer for 1 hour at room temperature and rotation speed of 500 rpm. 17 g (1.7%, w / w) polyvinylpyrrolidone (PVP) was then added. Stirring was continued under the same conditions for another 2 hours. The mixture was filtered through a 500 µm filter.

Polypropylene was mixed with 0.1% stearyl alcohol and conditioned at 80 °C for 1 hour before being poured into the extruder hopper. The feeder speed was set to 15 rpm. The solution of zinc acetate and polyvinylpyrrolidone was dosed into the fifth heating zone of the extruder using a peristaltic pump at a speed of 11.5 rpm. The temperatures in the individual heating zones are presented in Table 2.

**Table 2.**

| **Temperatures [°C]** | **Feeder speed [rpm]** | **Dosing pump speed [rpm]** |
|---|---|---|
| 240/240/240/240/240/240/220/220/220/220/220/220 | 15 | 11.5 |

The premix was cooled on a fan belt and then ground with a granulator. In this way, a polypropylene enriched with Zn particles with a content of 2% by weight was obtained.

### Example 3

420 g (42%, w / w) of zinc acetate and 354 g (35.4%, w / w) of deionized water were weighed into a conical flask. Dissolution of zinc salts was carried out using a mechanical stirrer for 1h at the temperature of 80° C and rotation speed of 500 rpm. Simultaneously, in a separate vessel, 26 g (2.6% w / w) of polyvinylpyrrolidone and 200 g (20% w / w) of deionized water were weighed and stirred with a magnetic stirrer at 40 °C until a homogeneous mixture of ingredients was obtained (approx. 1 h), the solutions were combined and stirring was continued at 80 °C for another hour.

Polypropylene was mixed with 0.1% sorbitan monopalmitate and conditioned at 80 °C for 1 hour before filling into the extruder hopper. The solution was dosed at 80 °C into the fifth heating zone of the extruder. The settings of the twin screw extruder and the peristaltic pump are summarized in Table 3.

**Table 3.**

| **Temperatures [°C]** | **Feeder speed [rpm]** | **Dosing pump speed [rpm]** |
|---|---|---|
| 240/240/250/240/240/220/220/220/220/220/220/220 | 8 | 15 |

Each composite obtained according to one of the above-described examples can be concentrated by secondary extrusion while dosing the solution.

The composite obtained according to example 2 was transferred to the dryer and conditioned at 80 °C for 1 hour before loading into the extruder hopper again. The extrusion combined with the dosing of the solution (as described in Example 2) was repeated 4 times, each time increasing the zinc concentration by 2%. The final composite contained 10 wt.% ZnO.

A methodology was developed that allowed to obtain composites of polypropylene with Zn compounds on a submicron scale with an assumed Zn content having antibacterial properties, which is confirmed by the following tests: optical microscopy, SEM, TEM, XRD, FAAS and biological tests.

The microscopic observations showed the presence of spherical zinc compounds of various sizes, evenly dispersed in the material. Fig. 1 shows an SEM microscope image of a composite containing 10% Zn, obtained according to the method described in Example 2.

The obtained granulate was diluted in the extrusion process with polypropylene to a concentration of 0.25%, 0.5% and 1% Zn. The zinc content of the samples was determined by the FAAS method. The results are summarized in Table 4.

**Table 4. Comparison of the FAAS results and the nominal zinc content in the samples.**

| **Sample ID** | **Zn content in composite** [%] | **Nominal value [%]** |
|---|---|---|
| **S1** | 0.26 | 0.25 |
| **S2** | 0.42 | 0.50 |
| **S3** | 1.02 | 1.00 |

The same samples were tested for antibacterial activity according to ISO 20743: 2019-10 against the strains *Staphylococcus aureus* and *Klebsiella pneumoniae.* The obtained results are summarized in Table 5.

**Table 5. Results of antimicrobial activity testing of the composite's samples at a concentration of 0.26%, 0.42% and 1.02%.**

| **Sample ID (%Zn)** | ***Staphylococcus aureus*** | ***Klebsiella pneumoniae*** |
|---|---|---|
| **S1 (0.26%)** | 1,62 | 4,40 |
| **S2 (0.42%)** | 2,71 | 5,31 |
| **S3 (1.02%)** | 4,60 | 5,27 |
| significant 2<A<3, strong >3 | | |

Microscopic observations using Transmission Electron Microscopy (TEM) revealed the presence of nanometric particles. Fig. 2a is a TEM image of the sample of the composite obtained according to example 1, and Fig. 2b according to a different composition. Structural examination by means of X-ray diffraction confirmed the presence of ZnO particles in the material. Fig. 3 shows the diffraction pattern of the composite obtained according to example 1, fig. 4a the diffraction pattern of the composite obtained according to example 2, and fig. 4b according to example 3.

The microscopic observations using a high-resolution optical microscope are shown in Fig. 5. The photos in Fig. 5 were taken with an optical microscope (x5000) of the granulate obtained according to example 3.

## Claims

1. The method of obtaining an antimicrobial composite used as an additive to plastics containing polyolefins, polyesters or polyamides and zinc oxide, which are incorporated into polymers during extrusion, wherein that to zinc salts, preferably zinc acetate or zinc sulphate or zinc nitrate or zinc chloride in an amount of 27% to 42% by weight, deionized water is added in an amount from 35.4% to 71.3% by weight and stirred with a mechanical stirrer for 1 hour at 25 °C to 90 °C at 500 rpm rotation speed, then 1.7% to 20% by weight of stabilizing polymer selected from the group of polyvinylpyrrolidone, polyimine, polyethylene glycol, polyacrylate, polyvinyl alcohol or polysulfone is added, with continued stirring for another 2 hours, then the mixture is filtered through a 500 µm filter and conditioned at room temperature or higher up to 90 °C until it is loaded into the extruder feeder, and the obtained solution of zinc salt and stabilizing polymer are dosed into the cylinder extruder with polyolefins during the extrusion process with a pump at a speed of 11.5 rpm, is thoroughly mixed and heated to the softening point of the polymer and pressed through nozzles, then cooled on a cooling belt or in a cooling bath and ground with a granulator and dried in a dryer at 80 °C for 1 hour.

2. The method according to claim 1, wherein before loading into the extruder 98-99.9% polyolefins, polyesters or polyamides are mixed with 0.1-2% of the stabilizer and conditioned at a temperature of 25 °C to 80 °C for 1 hour.

3. The method according to claim 1, wherein the sorbitan monopalmitate or stearyl alcohol is added as a stabilizer.

4. The method according to claim 1, wherein the zinc solution is applied so that the final composition is a masterbatch with antimicrobial properties and a zinc content of 0.25-10% by weight and with a good dispersion of zinc compounds particles.

5. The composite based on polyolefins, polyesters, or polyamides with an additive of antimicrobial properties, wherein it contains a polymer from 88% -99.65% (w / w), zinc 0.25-10% (w / w) and 0.1- 2% (w / w) of low molecular weight stabilizer.

6. The composite according to claim 5, wherein as a low molecular weight stabilizer includes a sorbitan monopalmitate.

7. The composite according to claim 5, wherein as a low molecular weight stabilizer includes a stearyl alcohol.
